# EUROPÄISCHE PATENTSCHRIFT

(11) **EP 0 410 145 B1**
(45) Veröffentlichungstag und Bekanntmachung des Hinweises auf die Patenterteilung: **31.08.1994**
(21) Anmeldenummer: 90111994.1
(22) Anmeldetag: 25.06.1990
(51) Int. Cl.: B61H 11/14, B60T 13/40

(54) **Druckluftbremseinrichtung für Schienenfahrzeuge**
Pneumatic brake device for railway vehicles
Dispositif pneumatique de freinage pour véhicules ferroviaires

(30) Priorität: 24.07.1989 DE 3924445
(43) Veröffentlichungstag der Anmeldung: 30.01.1991
(73) Patentinhaber: KNORR-BREMSE AG, 80710 München (DE)
(72) Erfinder: Skach, Kuno, A-1190 Wien (AT)

(56) Entgegenhaltungen:
- DE-B- 1 035 683
- FR-A- 2 158 136
- GB-A- 142 601
- GB-A- 2 212 572
- US-A- 2 317 132

## Beschreibung

Die Erfindung betrifft eine Druckluftbremseinrichtung für Schienenfahrzeuge, insbesondere Reisezugwagen oder Triebwagenzüge, mit auf die gleichen Fahrzeugräder wirkenden Scheibenbremsen und insbesondere zu Klotzbremseinheiten ausgebildeten Klotzbremsen, wobei letztere weniger als die Hälfte, gegenbenenfalls ca. ein Fünften bis ein Drittel des Gesamtbremsmomentes aufbringen.

Bei derartigen Druckluftbremseinrichtungen ist es bisher üblich, Bremsdruckleitungen vorzusehen, welche von einer Bremsdruckquelle, beispielsweise einem üblichen Bremsteuerventil, zu den Zuspannzylindern sowohl der Scheibenbremse wie der Klotzbremseinheiten führen; die Zuspannzylinder der Scheibenbremsen und Klotzbremsen sind also zueinander parallel an die Bremsdruckleitungen angeschlossen. Es können jeweils mehrere Zuspannzylinder von auf die gleichen Fahrzeugräder wirkenden Scheibenbremsen und Klotzbremsen zu einer Gruppe zusammengefaßt sein, welche an eine Bremsdruckleitung angeschlossen ist. Diese bekannten Druckluftbremseinrichtungen können des weiteren mit Gleitschutzeinrichtungen ausgestattet sein, welche an den Radsätzen angeordnete und von diesen angetriebene Sensoren aufweisen. Es ist bekannt, die Gleitschutzeinrichtungen dabei derart auszugestalten, daß sie während Fahrzeugverzögerungen beim Unterschreiten einer Fahrgeschwindigkeit von ca. 5 km/h unwirksam, beim Beschleunigen des Fahreuges bei Überschreiten einer Fahrgeschwindigkeit von ca. 3km/h wieder wirksam geschaltet werden. Die mit der eingangs erwähnten Druckluftbremseinrichtung ausgerüsteten Reisezugwagen oder Triebwagenzüge können mit einer Türsteuereinrichtung ausgestattet sein, welche ein selbsttätiges, manuelles oder manuell ausgelöstes Öffnen der Türen während der Fahrt verhindert: Diese Türsteuereinrichtungen ermöglichen das Öffnen der Türen beim Verzögern des Fahrzeuges beim Unterschreiten einer Fahrgeschwindigkeit von ca. 5 km/h und während des Fahrzeug-Stillstandes, während sie beim Beschleunigen des Fahrzeuges die Türen beim Überschreiten einer Fahrgeschwindigkeit von ca. 3 km/h schließen und gegen ein Öffnen verriegeln. Sowohl zum erwähnten Abschalten der Gleitschutzeinrichtungen wie zur Verriegelungssteuerung der Türsteueranlagen ist es bekannt, elektrische Schaltsignale zu verwenden, wobei zum Abschalten der Gleitschutzeinrichtungen bzw. Ermöglichen von Türöffnungen im niedrigen Fahrgeschwindigkeitsbereich bzw. bei Fahrzeugstillstand sowohl ein Signal gebildet werden als auch ein ansonsten anstehendes Signal entfallen kann.

Es hat sich gezeigt, daß mit der eingangs genannten Druckluftbremseinrichtung ausgestattete Schienenfahrzeuge während der Fahrt einen hohen Geräuschpegel aufweisen können, der anomal hohe Rollgeräusche beinhalten kann. Die erhöhten Rollgeräusche können dabei auf eine Polygonbildung an der Lauffläche des Rades zurückgeführt werden, welche zwar meßtechnisch kaum erfaßbar ist, jedoch als eine Art Strichcode am Radumfang sichtbar sein kann. Die Polygonbildung ist darauf zurückführbar, daß bei starker Bremsbetätigung die Klotzbremse kurz vor Fahrzeugstillstand, bei bereits abgeschalteten Gleitschutzeinrichtungen, ein progressiv ansteigendes Bremsmoment entwickelt, und/oder daß bei Fahrzeugstillstand die noch an die Laufflächen der Fahrzeugräder angepreßten, heißgebremsten Bremsklötze punktuell ungünstige thermische Beeinflussungen ergeben.

Aus der DE-PS 1 035 683 ist eine Druckluftbremseinrichtung bekannt, bei welcher das Bremsverhalten von Scheibenbremsen eines Zugfahrzeuges an das Bremsverhalten der Klotzbremsen von angehängten Wagenzügen angepaßt wird: Mit dem Abfallen des Reibwertes der Wagen-Klotzbremsen bei steigender Fahrgeschwindigkeit stellt sich dabei eine entsprechende Verminderung des Bremsdruckes der einen praktisch drehzahlunabhängigen Reibwert aufweisenden Lokomotiv-Scheibenbremsen ein. Es sind dabei jedoch keine Fahrzeuge vorhanden, bei welchen auf die gleichen Fahrzeugräder sowohl eine Scheibenbremse wie eine Klotzbremse wirkt.

Es ist Aufgabe der Erfindung, eine Druckluftbremseinrichtung der eingangs genannten Art mit einfachen Mitteln derart auszugestalten, daß Polygonbildungen an den Radlaufflächen und hierauf rückführbare Rollgeräusche mit hohem Geräuschpegel auch nach hohen Kilometerleistungen der Schienenfahrzeuge vermieden werden.

Diese Aufgabe wird nach der Erfindung dadurch gelöst, daß während Bremsvorgängen der an den Klotzbremsen aufgebrachte Bremsanteil am Gesamtbremsmoment mit sich vermindernder Fahrgeschwindigkeit durch zumindest teilweises Lösen der Klotzbremse reduziert wird. Es ist zu betonen, daß hierbei die Klotzbremse vollständig gelöst, ihr Bremsteil also auf den Wert 0 reduziert werden kann.

Durch diese Ausbildung der Druckluftbremseinrichtung wird erreicht, daß während Bremsvorgängen der sich mit vermindernder Fahrgeschwindigkeit steigernde Reibwert an den Klotzbremsen zu keiner Überbremsung führen kann, wobei zugleich ein übermäßiges Heißbremsen der Bremsklötze vermieden wird. Bei Erreichen des Fahrzeugstillstandes liegen die nicht übermäßig heißgebremsten Bremsklötze der Klotzbrmese mit nur verminderter Kraft oder überhaupt nicht an den Laufflächen der Fahrzeugräder an, sie können somit dort keine ungünstigen, thermischen beeinflussungen bewirken.

Die nach der weiteren Erfindung vorteilhaften Ausgestaltungsmöglichkeiten einer nach den vorstehend genannten Merkmalen ausgebildeten Druckluftbremseinrichtung kann den Unteransprüchen entnommen werden.

In der Zeichnung ist ein Ausführungsbeispiel einer nach der Erfindung ausgebildeten Druckluftbremseinrichtung dargestellt, und zwar zeigt
- Fig.1: ein mit der Druckluftbremseinrichtung ausgestattetes Drehgestell in schematischer Darstellung und
- Fig.2: das Schema eines Schaltventils.

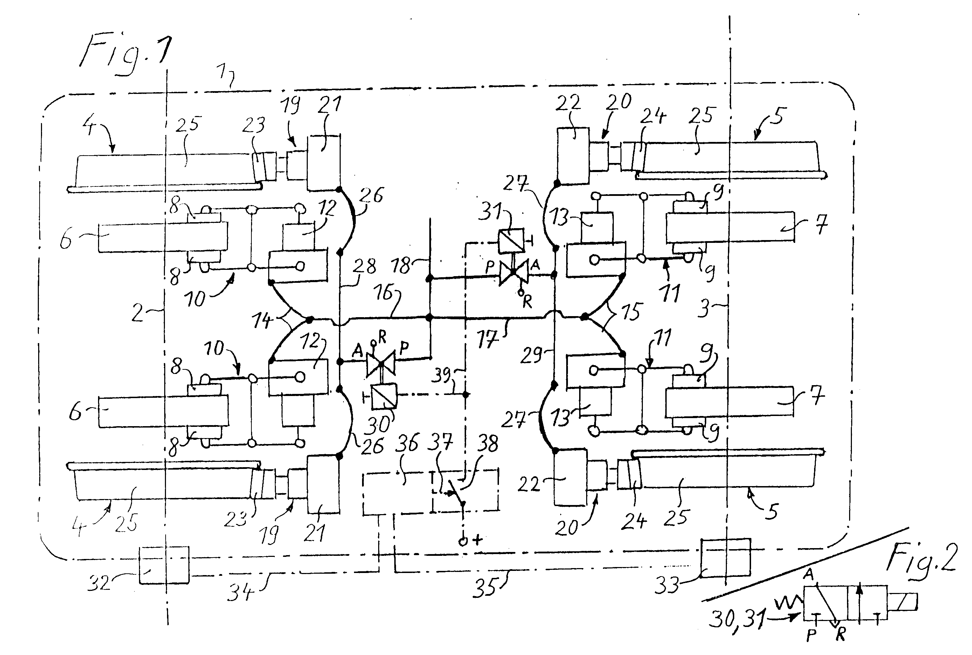

Die Fig.1 zeigt ein strichpunktiert angedeutetes Drehgestell 1 mit zwei Radsätzen 2 und 3, welchen die Fahrzeugräder 4 bzw. 5 zugehören. Die Radsätze 2,3 sind mit jeweils zwei Bremsscheiben 6,7 ausgestattet, an welche Bremsbacken 8,9 vermittels Bremszangen 10,11 anpreßbar sind. Die Bremszangen 10,11 sind vermittels Zuspannzylinder 12,13 betätigbar. Die Zuspannzylinder 12,13 sind über Schlauchleitungen 14,15 pneumatisch an Zweigleitungen 16,17 angeschlossen, welche zu einer Bremsdruckleitung 18 führen. Die Druckluftbeaufschlagung der Bremsdruckleitung 18 mit einem Bremsdruck ist von einem üblichen, nicht dargestellten Bremssteuerventil überwacht, das seinerseits vom Druckverhalten in einer ebenfalls nicht dargestellten Hauptluftleitung gesteuert ist.

Den Radsätzen 2,3 sind Klotzbremsen zugeordnet, welche als Bremsklotzeinheiten 19,20 mit Zuspannzylindern 21,22 ausgebildet sind. Die Bremsklötze 23,24 der Bremsklotzeinheiten 19,20 sind an die Radlaufflächen 25 der Fahrzeugräder 4,5 anpreßbar. Die Zuspannzylinder 21,22 sind über Schlauchleitungen 26,27 an Abschnitte 28,29 der Bremsdruckleitung 18 angeschlossen, wobei in jeden Abschnitt 28,29 ein als Magnetventil 30,31 ausgebildetes Schaltventil eingeordnet ist. Der Anschluß P der Magnetventile 30,31 steht über die Bremsdruckleitung 18 mit dem nicht dargestellten Bremssteurventil, der Anschluß A mit den Zuspannzylindern 21,22 und der Anschluß R mit der Atmosphäre in Verbindung. Gemäß dem Funktionsschema nach Fig.2 sind bei unerregtem Magnetventil 30,31 jeweils die Anschlüsse A und R miteinander verbunden, während der Anschluß P abgesperrt ist; bei erregtem Magnetventil 30,31 stehen die Anschlüsse A und P in Verbindung, während der Anschluß R abgesperrt ist.

Die Druckluftbremseinrichtung des Drehgestelles 1 ist mit einer Gleitschutzeinrichtung ausgestattet, von welcher nur die mit den Radsätzen 2,3 gekoppelten Sensoren 32,33 und deren Kabelverbindungen 34,35 zu einem elektronischen Steuergerät 36 dargestellt ist; die übrige Gleitschutzeinrichtung, insbesondere die in die Bremsdruckleitung 18 einzuordnenden Gleitschutzventile sind in Fig.1 nicht dargestellt. Im Steuergerät 36 wird in Abhängigkeit von den über die Kabel verbindungen 34,35 zugeführten Signalen der Sensoren 32,33 ein Schaltsignal erstellt, welches bei Verzögerungen des Fahrzeuges beim Unterschreiten von ca. 5 km/h die Gleitschutzeinrichtung abschaltet, beim Beschleunigen des Fahrzeuges beim Überschreiten einer Fahrgeschwindigkeit von ca. 3 km/h die Gleitschutzeinrichtung wieder einschaltet. Dieses Schaltsignal kann auch in nicht dargestellter Weise zum Steuern einer Türsteuereinrichtung verwendet werden, derart, daß die Türen nur bei zumindest nahezu stehendem Fahrzeug zu öffnen sind. Nach Fig.1 ist ein elektrischer Schalter 38 vorgesehen, der vom durch einen Pfeil 37 angedeuteten Schaltsignal schaltbar ist und der in eine Kabelverbindung 39 von einer durch ein Plus-Zeichen angedeuteten Stromquelle zu den Erregungsspulen der Magnetventile 30 und 31 eingeordnet ist. Der Schalter 38 wird vom Schaltsignal gemäß Pfeil 37 derart geschaltet, daß die Magnetventile 30,31 nur bei Überschreiten der vorstehend erwähnten Fahrgeschwindigkeiten erregt, bei Unterschreiten dieser Fahrgeschwindigkeiten und stehendem Fahrzeug dagegen entregt sind.

Wird bei höherer Fahrgeschwindigkeit eine Bremsung eingeleitet, so gelangt der vom nicht dargetellten Bremssteuerventil in die Bremsdruckleitung 18 eingesteuerte Bremsdruck durch die Zweigleitungen 16 und 17 sowie die Schlauchleitungen 14 und 15 zu den Zuspannzylindern 12 und 13 der Scheibenbremse und zugleich durch die erregten und damit ihre Anschlüsse P und A miteinander verbindenden Magnetventile 30 und 31 sowie die Abschnitte 28 und 29 und die Schlauchleitungen 26 und 27 zu den Zuspannzylindern 21 und 22 der Bremsklotzeinheiten 19 und 20. Die Scheibenbremsen und die Klotzbremsen werden also in üblicher Weise betätigt, wobei die Klotzbremsen einen Bremsanteil von ca. ein Fünftel bis ein Drittel des Gesamtbremsmomentes aufbringen. Sobald die Fahrgeschwindigkeit unter ca. 5 km/h absinkt, wird vermittels des Schaltsignals der zuvor geschlossene Schalter 38 geöffnet, so daß die Magnetventile 30 und 31 abfallen und die Zuspannzylinder 21 und 22 von der Bremsdruckleitung 18 abtrennen über ihre Anschlüsse R in die Atmosphäre entlüften; die Klotzbremse bzw. Bremsklotzeinheiten 19 und 20 werden also gelöst. Die Bremsklötze 23,24 werden somit bei der erwähnten Geschwindigkeitsgrenze unterschreitender Fahrgeschwindigkeit und bei stehendem Fahrzeug nicht an die Laufflächen 25 angepreßt und können diese nicht schädigend beeinflussen. Beim Wiederanfahren wird vermittels des Schaltsignales gemäß Pfeil 37 der Schalter 38 bei Überschreiten einer Fahrgeschwingkeit von ca. 3 km/h geschlossen, wodurch die Klotzbremse bzw. Bremsklotzeinheiten 19,20 durch Erregen der Magnetventile 30,31 wieder betriebsbereit geschaltet werden.

Das durch den Pfeil 37 symbolisierte Schaltsignal kann durch ein bei hohen Fahrgeschwindigkeiten anstehendes, bei Unterschreiten der erwähnten Fahrgeschwindigkeit von ca 5 km/h entfallendes, elektrisches Signal oder umgekehrt durch ein erst bei Unterschreiten dieser Fahrgeschwingkeit auftretendes, elektrisches Signal dargestellt werden. In Abänderung vom vorbeschriebenen Ausführungsbeispiel kann die Funktionsweise der Magnetventile 30,31 umgekehrt werden, derart, daß bei unerregten Magnetventilen die Anschlüsse A und P, bei erregten Magnetventilen dagegen die Anschlüsse A und R miteinander verbunden sind; die Ansteuerung des Schalters 38 ist dabei entsprechend umzukehren.

In weiterer Abänderung des vorstehend beschriebenen Ausführungsbeispieles ist es auch möglich, die Druckluftbremseinrichtung derart auszugestalten, daß bei niedrigen Fahrgeschwindigkeiten die durch die Bremsklotzeinheiten 19,20 gebildete Klotzbremse nicht vollständig abgeschaltet, sondern nur vermindert betätigt wird, wobei der Minderungsgrad mit sinkender Fahrgeschwindigkeit etwa kontinuierlich gesteigert oder auch bei bestimmten Fahrgeschwindigkeitsgrenzen gestuft geschaltet wird. In weiterer Abänderung ist es hierbei möglich, die Minderung der Bremswirkung der Klotzbremse bereits bei relativ hohen Fahrgeschwindigkeiten von ca. 50 km/h einsetzen zu lassen. Die Betätigung des Schalters 38 muß nicht in Abhängigkeit von einem Schaltsignal der Gleitschutzeinrichtung erfolgen, sie kann auch von einem anderweitig erstellten und/oder anderen Zwecken dienenden oder einem nur für den Schalter 38 erstellten Schaltsignal erfolgen. Es kann zweckmäßig sein, den Schalter 38 als Relaisschalter auszubilden.

### Kurzfassung:

Die Druckluftbremseinrichtung für Schienenfahrzeuge weist auf die gleichen Fahrzeugräder (4,5) wirkende Scheibenbremsen (8,10,12 und 9,11,13) und Klotzbremsen (19,20) auf. Zum Vermeiden von Beschädigungen der Laufflächen (25) der Fahrzeugräder (4,5), welche durch die Klotzbremse (19,20) bei deren Betätigung während niedrigen Fahrgeschwindigkeiten bzw. bei stehendem Fahrzeug auftreten können, sind in die Bremsdruckleitungen (18,28,29) zu den Zuspannzylindern (21,22) der Klotzbremse (19,20) Schaltventile (30,31) eingeordnet, welche bei Unterschreiten niedriger Fahrgeschwindigkeit und bei stehendem Fahrzeug die Klotzbremse (19,20) lösen oder zumindest in ihrer Zuspannkraft reduzieren. Die Betätigung der Scheibenbremsen (8,10,12 und 9,11,13) erfolgt unbeeinflußt von den Schaltventilen (30,31).

## Patentansprüche

1. Druckluftbremseinrichtung für Schienenfahrzeuge, insbesondere Reisezugwagen oder Triebwagenzüge, mit auf die gleichen Fahrzeugräder (4,5) wirkenden Scheibenbremsen (8,10,12;9,11,13) und insbesondere zu Klotzbremseinheiten (19,20) ausgebildeten Klotzbremsen, wobei letztere weniger als die Hälfte, gegebenenfalls ca. ein Fünftel bis ein Drittel des Gesamtbremsmomentes aufbringen, dadurch gekennzeichnet, daß während Bremsvorgängen der an den Klotzbremsen (19,20) aufgebrachte Bremsanteil am Gesamtbremsmoment mit sich vermindernder Fahrgeschwindigkeit durch zumindest teilweises Lösen der Klotzbremse (19,20) reduziert wird.

2. Druckluftbremseinrichtung nach Anspruch 1, dadurch gekennzeichnet, daß die Klotzbremse (19,20) während Bremsvorgängen bei Unterschreiten einer niedrigen Fahrgeschwindigkeit von ca. 5 km/h, gelöst wird.

3. Druckluftbremseinrichtung nach Anspruch 2, für Schienenfahrzeuge, welche bei Unterschreiten einer niedrigen Fahrgeschwindigkeit von ca. 5 km/h ein Schaltsignal zum Ermöglichen von Türöffnungen und/oder Abschalten einer Gleitschutzeinrichtung (36) führen, wobei das Schalsignal durch Bilden oder Entfall eines Signals gebildet ist, dadurch gekennzeichnet, daß in Abhängigkeit vom Auftreten des Schaltsignals ein Lösen der Klotzbremse (19,20) erfolgt.

4. Druckluftbremseinrichtung nach Anspruch 3, dadurch gekennzeichnet, daß das Schaltsignal das Lösen der Klotzbremse (19,20) bewirkt.

5. Druckluftbremseinrichtung nach einem oder mehreren der vorstehenden Ansprüche, mit von einer Bremsdruckquelle zu gegebenenfalls in Gruppen zusammengefaßten Zuspannzylindern (21,22) der Klotzbremse (19,20) führenden Bremsdruckleitungen (18,28,29), dadurch gekennzeichnet, daß in die Bremsdruckleitungen (28,29) Schaltventile (30,31) eingeordnet sind, die fahrgeschwindigkeitsabhängig oberhalb einer bestimmten Fahrgeschwindigkeit auf Durchgang und unterhalb der Fahrgeschwindigkeit auf Sperren des Durchganges und Entlüften der zu den Zuspannzylindern (21,22) führenden Abschnitte der Bremsdruckleitungen (28,29) geschaltet sind.

6. Druckluftbremseinrichtung nach den Ansprüchen 4 und 5, wobei das Schaltsignal ein elektrisches Signal ist, dadurch gekennzeichnet, daß die Schaltventile als vom Schaltsignal gegebenenfalls über einen Relaisschalter erregbare Magnetventile (30,31) ausgebildet sind.

7. Druckluftbremseinrichtung nach Anspruch 5, wobei die Bremsdruckleitungen (18) über Zweigleitungen (16,17) mit den Zuspannzylindern (12,13) der Scheibenbremsen (8,10,12;9,11,13) verbunden sind, dadurch gekennzeichnet, daß die Schaltventile (30,31) in zwischen den Abzweigungen der Zweigleitungen (16,17) und den Zuspannzylindern (21,22) der Klotzbremsen (19,20) befindlichen Abschnitten (28,29) der Bremsdruckleitung eingeordnet sind.

8. Druckluftbremseinrichtung nach einem oder mehreren der vorstehenden Ansprüche, dadurch gekennzeichnet, daß die fahrgeschwindigkeitsabhängige Lösesteuerung der Klotzbremse (19,20) eine Hysteres aufweist, derart, daß beim Verzögern des Fahrzeuges das Reduzieren des Bremsanteils der Klotzbremse (19,20) bei höheren Geschwindigkeiten als beim Beschleunigen des Fahrzeuges das Aufheben der Reduzierung erfolgt.

9. Druckluftbremseinrichtung nach den Ansprüchen 2 und 8, dadurch gekennzeichnet, daß beim Beschleunigen des Fahrzeuges das Aufheben der Reduzierung des Bremsanteils der Klotzbremse (19,20) bei Überschreiten einer Fahrgeschwindigkeit von ca. 3 km/h erfolgt.

## Claims

1. Compressed air brake device for rail vehicles, in particular passenger train carriages or multiple unit trains, having disc brakes (8, 10, 12; 9, 11, 13) acting on the same vehicle wheels (4, 5) and block brakes, in particular block brakes constructed to form block brake units (19, 20), wherein the latter apply less than half, possibly about a fifth to a third of the total brake torque, characterised in that during braking procedures the proportion of the total brake torque applied to the block brakes (19, 20) is reduced with decreasing travel speed by at least partial release of the block brake (19, 20).

2. Compressed air brake device according to claim 1, characterised in that the block brake (19, 20) is released during braking procedures when the travel speed falls below a low value of about 5 km/h.

3. Compressed air brake device according to claim 2, for rail vehicles which, when the travel speed falls below a low value of about 5 km/h, produces a switching signal to make possible the opening of doors and/or the switching off of an anti-skid device (36), wherein the switching signal is formed by formation or omission of a signal, characterised in that a release of the block brake (19, 20) is effected in dependence on the occurrence of the switching signal.

4. Compressed air brake device according to claim 3, characterised in that the switching signal causes the release of the block brake (19, 20).

5. Compressed air brake device according to one or more of the preceding claims, having brake pressure lines (18, 28, 29) leading from a brake pressure source to clamping cylinders (21, 22) of the block brake (19, 20), these cylinders possibly being brought together in groups, characterised in that switching valves (30, 31) are inserted into the brake pressure lines (28, 29) and, in dependence on travel speed, are connected above a specific travel speed to passage and below the travel speed to blocking of the passage and ventilation of the sections of the brake pressure lines (28, 29) leading to the clamping cylinders (21, 22).

6. Compressed air brake device according to claims 4 and 5, wherein the switching signal is an electrical signal, characterised in that the switching valves are designed as magnetic valves (30, 31) which can be activated if necessary by means of a relay switch.

7. Compressed air brake device according to claim 5, wherein the brake pressure lines (18) are connected by means of branch lines (16, 17) to the clamping cylinders (12, 13) of the disc brakes (8, 10, 12; 9, 11, 13), characterised in that the switching valves (30, 31) are inserted into sections (28, 29) of the brake pressure line located between the branches of the branch lines (16, 17) and the clamping cylinders (21, 22) of the block brakes (19, 20).

8. Compressed air brake device according to one or more of the preceding claims, characterised in that the travel-speed-dependent release control of the block brake (19, 20) has a hysteresis such that the reduction in the amount of braking of the block brake (19, 20) when the vehicle is retarded is effected at higher speeds than the elimination of the reduction when the vehicle accelerates.

9. Compressed air brake device according to claims 2 and 8, characterised in that the elimination of the reduction of the amount of braking of the block brake (19, 20) during acceleration of the vehicle is effected when a travel speed of about 3 km/h is exceeded.

## Revendications

1. Dispositif de freinage à air comprimé pour véhicules sur rails, notamment pour des voitures pour voyageurs ou pour des trains automoteurs, comportant des freins à disques (8, 10, 12; 9, 11, 13) qui agissent sur les mêmes roues (4, 5) de véhicule, et notamment de freins à sabot agencés notamment de manière à former des unités de freins à sabot (19, 20), ces derniers fournissant moins de la moitié et éventuellement environ entre un cinquième et un tiers du moment de freinage total, caractérisé par le fait que lors d'opérations de freinage, la composante du moment de freinage total, qui est appliquée aux freins à sabot (19, 20), est réduite, lorsque la vitesse de déplacement diminue, par un desserrage au moins partiel des freins à sabot (19, 20).

2. Dispositif de freinage à air comprimé suivant la revendication 1, caractérisé par le fait que les freins à sabot (19, 20) sont desserrés pendant des opérations de freinage, lorsque la vitesse de déplacement tombe au-dessous d'une faible valeur égale à environ 5 km/h.

3. Dispositif de freinage à air comprimé suivant la revendication 2, pour des véhicules sur rails, qui, lorsque la vitesse de déplacement tombe au-dessous d'une faible valeur égale à environ 5 km/h, envoie un signal de commutation destiné à permettre l'ouverture des portes et/ou le débranchement d'un dispositif anti-patinage (36), le signal de commutation étant formé au moyen de la formation ou de la suppression d'un signal, caractérisé par le fait qu'un desserrage des freins à sabot (19, 20) est réalisé en fonction de l'apparition du signal de commutation.

4. Dispositif de freinage à air comprimé suivant la revendication 3, caractérisé par le fait que le signal de commutation déclenche le desserrage des freins à sabot (19, 20).

5. Dispositif de freinage à air comprimé suivant une ou plusieurs des revendications précédentes, comportant des conduites d'air comprimé de freinage (18, 28, 29), qui mènent à une source d'air comprimé de freinage à des cylindres de serrage (21, 22), éventuellement réunis en groupes, des freins à sabot (19, 20), caractérisé par le fait que dans les conduites (28, 29) d'air comprimé de freinage sont disposées des soupapes de commutation (30, 31), qui, en fonction de la vitesse de déplacement, sont commutées, au-dessus d'une vitesse de déplacement déterminée, dans leur état passant et, au-dessous de cette vitesse de déplacement, elles sont commutées dans leur état de fermeture et de d'évacuation des sections des conduites d'air comprimé de freinage (28, 29), qui aboutissent aux cylindres de serrage (21, 22).

6. Dispositif de freinage à air comprimé suivant les revendications 4 et 5, dans lequel le signal de commutation est un signal électrique, caractérisé par le fait que les soupapes de commutation sont constituées sous la forme d'électrovannes (30, 31), qui peuvent être excitées par le signal de commutation, éventuellement par l'intermédiaire d'un conjoncteur.

7. Dispositif de freinage à air comprimé suivant la revendication 5, dans lequel les conduites (18) d'air comprimé de freinage sont reliées par l'intermédiaire de conduites de dérivation (16, 17), aux cylindres de serrage (12, 13) des freins à disque (8, 10, 12; 9, 11, 13), caractérisé par le fait que les soupapes de commutation (30, 31) sont disposées dans des sections (28, 29) de la conduite d'air comprimé de freinage, qui sont situées entre les dérivations des conduites de dérivation (16, 17) et les cylindres de serrage (21, 22) des freins à sabot (19, 20).

8. Dispositif de freinage à air comprimé suivant une ou plusieurs des revendications précédentes, caractérisé par le fait que la commande de desserrage, qui dépend de la vitesse de déplacement, des freins à sabot (19, 20) possède une hystérèse telle que, lors de la décélération du véhicule, la réduction de la composante de freinage des freins à sabot (19, 20) s'effectue à des vitesses plus élevées que s'effectue la suppression de la réduction lors de l'accélération du véhicule.

9. Dispositif de freinage à air comprimé suivant les revendications 2 et 8, caractérisé par le fait que lors de l'accélération du véhicule, la suppression de la réduction de la composante de freinage des freins à sabots (19, 20) intervient lors du dépassement d'une vitesse de déplacement d'environ 3 km/h.
